# EUROPEAN PATENT SPECIFICATION

(11) **EP 2 346 314 B1**
(45) Date of publication and mention of the grant of the patent: **22.01.2020**
(21) Application number: 09747931.5
(22) Date of filing: 22.10.2009
(51) Int. Cl.: A01G 3/04

(54) **TRIMMING MACHINE**
SCHNEIDWERKZEUG
TAILLEUSE

(30) Priority: 22.10.2008 NL 1036097
(43) Date of publication of application: 27.07.2011
(73) Proprietor: Becx Machines B.V., 5066 GJ Moergestel (NL)
(72) Inventor: HOMMEN, Erwin Andreas Gerardus, 5066 GM Moergestel (NL)
(74) Representative: Griebling, Onno
(86) International application number: PCT/NL2009/000201
(87) International publication number: WO 2010/053351

(56) References cited:
- DE-A1- 4 240 866
- DE-A1- 4 418 762
- GB-A- 2 246 695
- US-A- 26 793
- US-A- 4 302 922
- US-A- 5 430 999
- US-A1- 2006 230 733

## Description

The invention relates to a trimming machine, especially to a trimming machine that is easily capable of trimming large surfaces, such as hedges.

For small scale hedge trimming, use can be made of scissors; on a larger scale, use is made of machines driven by a motor. In that case, distinction can be made between machines having two knife blocks alternating linearly with respect to each other, and machines having a revolving knife block. The present invention relates to machines of the latter type.

GB-1.143.812 describes a trimming machine having a revolving knife block. This machine has one single knife block, and is therefore less suitable for trimming the side of high hedges, which is particularly important in the case of professionally trimming for instance the municipal hedges in a park or along a street.

US-5.430.999 discloses a trimming machine having a plurality of rotary cutting blades arranged staggered in a common plane.

GB-2.246.695 discloses a lawn mower with a single rotary front knife and two rotary knives in a rear row.

It is a general purpose of the present invention to provide a trimming machine that is easily capable of trimming large surfaces.

When trimming hedges, shoots are trimmed. The trimmed shoots fall on the ground or in the hedge, and die. For a tidy appearance, they need to be cleared, but this is time consuming. It is a further important aim of the present invention to provide a trimming machine in which this disadvantage is absent or at least reduced.

Claim 1 describes a trimming machine according to the invention, and claim 18 describes a method for trimming a hedge or the like according to the invention.

These and other aspects, features and advantages of the present invention will be further clarified by the following description with reference to the drawings, in which same reference numerals indicate same or similar parts, in which indications "below/above", "higher/lower", "left/right" et cetera exclusively relate to the orientation showing in the drawings, and in which:
figure 1 schematically shows a trimming machine, mounted at the end of a manipulation arm of a tractor;
the figures 2A and 2B show a schematic side view and a schematic front view, respectively, of the trimming machine;
figure 3 shows a schematic perspective view of a knife block;
the figures 4A-4D schematically illustrate problems of some arrangement variations not according to the present invention;
figure 5 schematically illustrates a problem of a trimming disc not according to the present invention;
figure 6 is a schematic perspective view of a trimming assembly according to the present invention;
figure 7 shows a schematic bottom view of the trimming assembly of figure 6;
figure 8 shows a schematic side view of the trimming assembly of figure 6;
figure 9 illustrates a trimmed hedge surface with concavely curved trimming surface parts;
figures 10-13 illustrate some safety aspects of the house of a trimming machine.

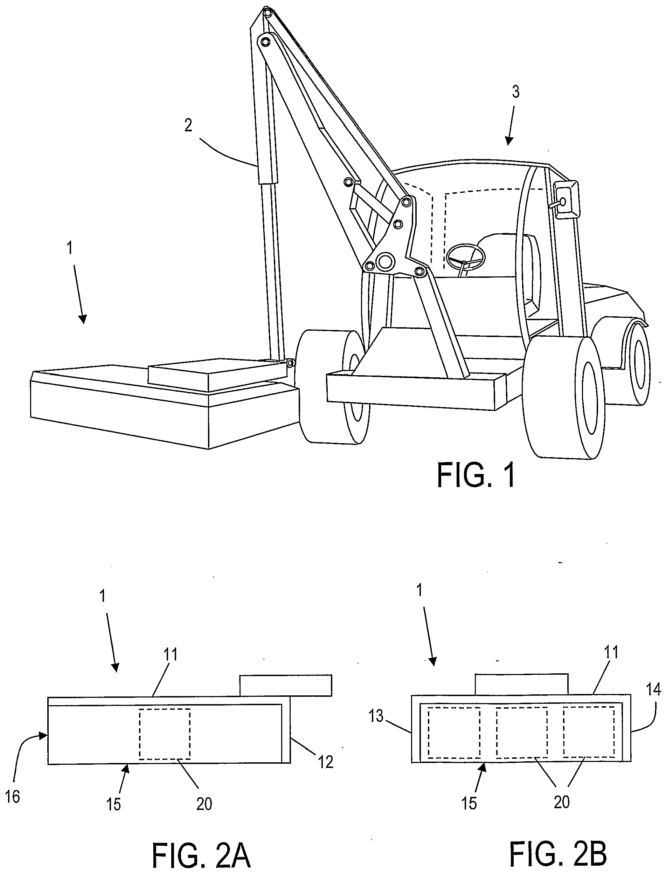

Figure 1 schematically shows a trimming machine 1, mounted at the end of an arm 2 of a tractor 3. The arm 2 is a manipulation arm, with which the trimming machine can be lifted and with which the orientation of the trimming machine can be adapted to the orientation of a hedge surface to be trimmed. This manipulation can be controlled by an operator (not shown) in the tractor. In practice it may be possible that the tractor drives along a hedge to be trimmed, and that the hedge face is trimmed while driving.

As will be explained more elaborately later, the trimming machine 1 comprises revolving knife blocks, which are driven by motors. The actuation and supply of these motors is taken care of from the tractor 3 through conduits guided along the arm 2, which is however not shown for sake of simplicity.

The trimming machine 1, at least in the example shown, has a general appearance of a rectangular box. However, the precise external appearance is not essential.

Figure 2A shows a schematic side view of the trimming machine 1, and figure 2B shows a schematic front view thereof. The trimming machine 1 comprises a house 10, with a closed upper wall 11, a closed rear wall 12, and closed side walls 13, 14. A bottom face 15 of the trimming machine 1 is defined by the lower edges of the rear wall 12 and the side walls 13, 14 lying in one plane; this lower face is substantially open. A front face 16 of the trimming machine 1 is defined by the front edges of the upper wall 11 and the side walls 13, 14; this front face is substantially open. During use, the trimming machine 1 is moved over a surface to be trimmed, with its lower face 15 directed towards this surface to be trimmed, and with its front face in the direction of movement, so that shoots of the hedge to be trimmed can enter the house 10. In figure 2A, the trimming machine 1 is shown with its lower face 15 directed downwards for trimming an upper surface of a hedge, and with its front face 16 directed to the left for a movement to the left.

In the following, mutually perpendicular directions x_{H}, y_{H} en z_{H} will be defined, related to the surface of a hedge to be trimmed. The z_{H}-direction is perpendicular to the surface to be trimmed, and will also be indicated as "height". The x_{H}-direction is parallel to the surface to be trimmed, in the main movement direction, and will also be indicated as "length". The y_{H}-direction is parallel to the surface to be trimmed, perpendicular to the main movement direction, and will also be indicated as "width" of "transverse direction".

Multiple rotating knife blocks 20 are arranged in the house 10. These are sketched only schematically with dotted lines in figure 2A and 2B, wherein figure 2B shows that there are multiple knife blocks 20 arranged next to each other in the transverse direction, in the example shown three. Although this is a preferred number, the present invention is not restricted to this number.

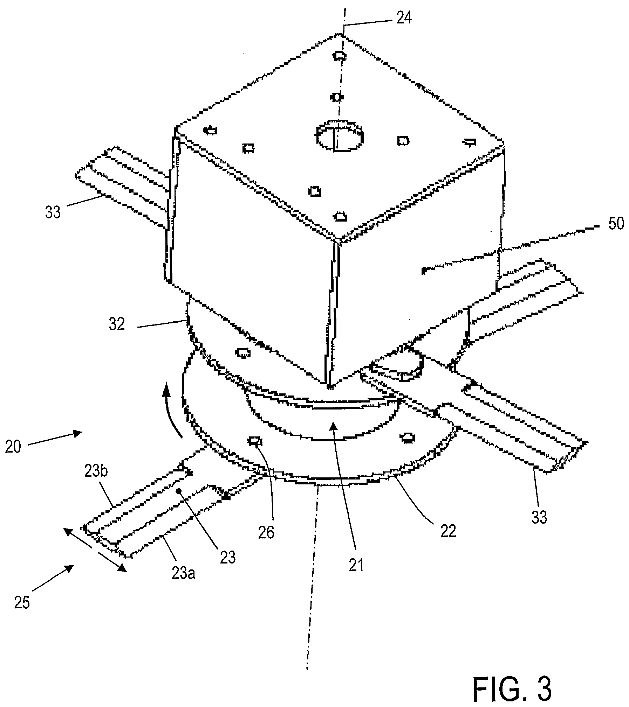

Figure 3 is a schematic perspective view showing more details of a single knife block 20. The knife block 20 comprises a cylindrical knife carrier 21. A flange 22 is attached to the knife carrier 21. A knife 23 is attached to the flange 22. The knife carrier 21 is rotatebly attached to a drive unit 50; the rotation access is indicated at 24. The drive unit 50 is fixedly attached to a frame (not shown here) of the trimming machine 1. For sake of explanation, and for the sake of convenience, it will be assumed for the time being that the rotation axes 24 is directed substantially vertically, i.e. substantially perpendicular to the bottom face 15.

The knife 23 extends substantially radially with respect to the rotation axes 24. That is to say that the knife 23 has longitudinal cutting edges 23A, 23B which extend in a common plane perpendicular to the rotation axes 24. A center line of the knife is directed perpendicular to the rotation axes 24, and the cutting edges 23A, 23B are parallel to this center line. The knife 23 may be fixes with respect to the flange 22, but it is also possible, and even preferred, that the knife 23 is hingedly attached to the flange 22, by means of a hinge 26 of which the hinge axes is substantially parallel to the rotation axes 24. Thus, it is possible that the knife hinges with respect to the flange 22, as indicated by arrows, for instance when the knife meets a thick branch, thus counteracting damage and/or wear of the mechanism. Otherwise, the knife is directed to its normal operative position discussed above and illustrated in the figure, caused by the centrifugal force.

During operation, it is desirable that the rotating knife block 20 vibrates as less as possible. Therefore, it is recommended to assure that the center of gravity of the rotating knife block coincides with the rotation axes 24. This may be achieved by counter weights, so that it is possible that the flange 22 only carries one single knife 23. However, it is preferred that the flange 22 carriers two knives 23, at a mutual angular distance of 180°, as shown, or that the flange 22 carries three knives 23, at a mutual angular distance of 120° (not shown). Four or more knives is also possible, wherein always the mutual angular distance is preferable approximately equal to 360°/N, with N the number of knives. The knives are located in a common plane. The knives attached to one and the same flange are commonly indicated as a knife disc 25. With this, it is also expressed that in an alternative embodiment the knives and the flange are formed as an integral whole.

According to an important aspect of the present invention, at least two flanges are attached to the knife carrier 21, at an axial distance from each other; this distance is in the order of about 7-8 cm in a suitable embodiment, but this is not critical. In figure 3, a second flange is indicated at 32. In a similar manner as discussed in the above in relation to the first flange 22, knives 33 are attached to the second flange 32; the knife disc defined hereby is indicated by reference numeral 35. In the embodiment shown, the number of flanges is equal to two, but this number may also be larger. For sake of distinction, the knife disc 25 will be indicated as lower knife disc and the knife disc 26 will be indicated as upper knife disc.

In the example shown, each flange 22, 32 carries two knives 23, 33. However, the number of knives of the second flange 32 is not necessarily equal to the number of knives of the first flange 22. When the numbers of knives are mutually equal to each other, it is possible that the knives of the different flanges are mutually aligned with each other, or that the knives of the different flanges are displaces with respect to each other in circumferential direction over a distance of 180°/N, as in the embodiment shown.

By this design with multiple layers of knives, the trimming machine 1 also behaves as chopper for reducing the trimming waste. Consequently, this trimming waste does not have to be collected and/or disposed of and transported away: the reduced trimming waste eventually falls on the bottom below the hedge and will eventually turn into compost there.

When during operation the trimming machine 1 is moved in a direction parallel to its lower face 15, thus substantially perpendicular to the rotation axes 24, a single knife block 20 can only trim a track with a width corresponding to the diameter of a lowest knife disc, that is to say twice the distance from the rotation axes 24 to the free end of a knife 23; preferably this distance is the same for all knives. In a practical realization, this diameter may be in the order of about 50 cm. However, hedges may typically have a height in the order of about 2 m. Therefore, it is desirable to be able to trim a wider track in one single work stroke.

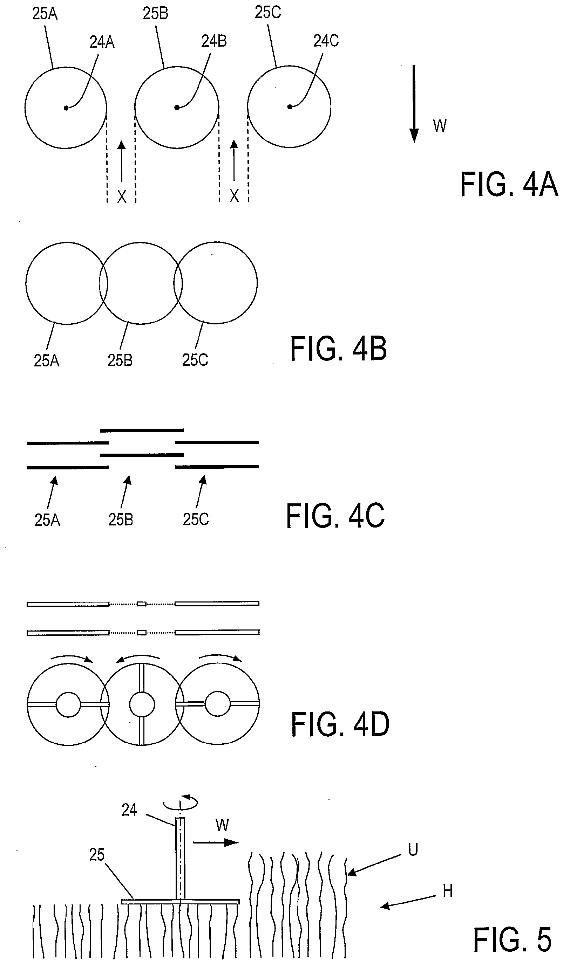

In order to be able to work more efficiently, multiple knife blocks 22 may be arranged next to each other, as shown in front view (see figure 2B). Figures 4A-4D illustrate some variations of such arrangement, and problems associated with these variations will be discusses in the following, wherein it is noted that the arrangements according to figures 4A-4D are not the arrangement according to the invention.

Figure 4A shows a schematic top view of an arrangement with three knife blocks, wherein for sake of simplicity only the three lowest knife discs 25 are shown, mutually distinguished from each other by addition of a letter A, B, C. It is assumed that the three knife blocks are mutually identical (this is preferred from cost considerations, but as such is not essential for the present invention). The three knife blocks are arranged in line, with which is mend that their three respective rotation axes 24A, 24B, 24C are located in a common vertical plane. During a work stroke, the trimming machine 1 is moved in a direction perpendicular to that plane, indicated by an arrow W. The mutual distance between two neighboring knife blocks is always larger than the diameter of the knife discs 25. It will be clear that strips X remain between the knife blocks, that are not trimmed by the knife blocks. For a full trimming, the trimming machine 1 must be moved twice over the same work range.

Figure 4B is a top view comparable to figure 4A of a variation where this disadvantage has been overcome because the mutual distance between two neighboring knife blocks is always smaller than the diameter of the knife discs 25. It will be clear that now there is the danger that the knives 23 of neighboring knife blocks touch each other.

Figure 4C is a schematic front view of the three knife blocks 20A, 20B, 20C, illustrating that the problem of knives touching each other can be solved by shifting the middle knife block 20B axially (i.e. vertically) with respect to its neighbors, or at least shifting the knife discs 25B, 35B of the middle knife block 20B axially with respect to the neighboring knife discs 25A, 25C and 35A, 35C. Although it will be clear that the rotating knives now will not touch each other, this solution has the disadvantage that this leads to trim tracks of mutual different height, and thus it does not lead to a nice smooth trimming result.

Figure 4D is a top view comparable to figure 4B illustrating that the mutual distance between two neighboring knife blocks can be smaller than the diameter of the knife discs 25 with the knives at the same height without the knives touching each other, if the orientations of the knives of the neighboring knife blocks are shifted over 180°/N. The extend to which overlap of two knife discs is possible is larger as N is smaller, and at equal N it is larger if neighboring knife blocks always have mutually opposite directions of rotation. However, a disadvantage is then always that the rotations of the different knife blocks must be mutually exactly synchronized, which leads to the necessity of a more complex and more expensive arrangement with for instance a toothed coupling belt or coupling chain. The present invention in contrast provides an arrangement in which such synchronization is not necessary.

Figure 5 schematically illustrates a further problem of a rotating trimming disc not according to the invention. A hedge to be trimmed is schematically indicated at H. When the lower knife disc 25 is held exactly parallel to the surface to be trimmed and the direction W of propagation is thus precisely perpendicular to the rotation axes 25, the knife disc 25 will at its front side (the right hand side in the figure) always cut the shoots U, but the entire knife disc 25 "rubs" so to say over the cut ends of the shoots U, which leads to rough ends. The present invention provides an arrangement with which this problem is solved as well.

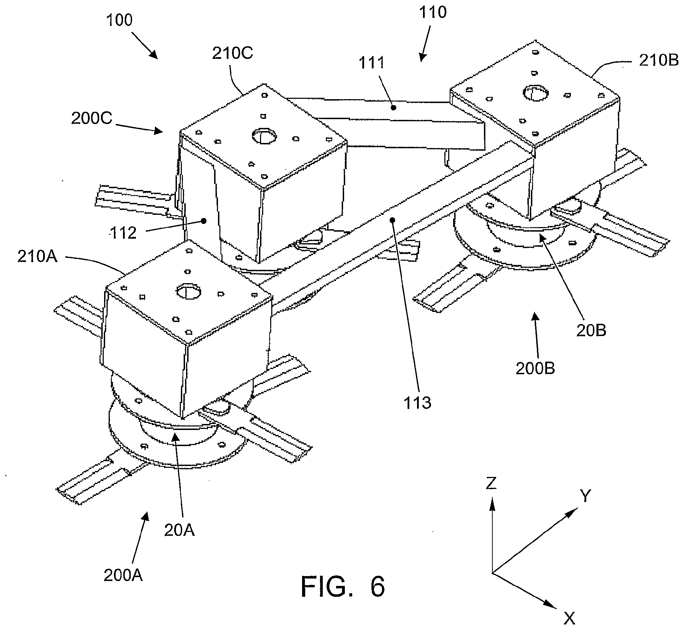

Figure 6 is a schematic perspective view of a trimming assembly 100 of a trimming machine according to the present invention, which trimming assembly 100 is arrangement within the housing 10, which is not shown in this figure for sake of simplicity. The trimming assembly 100 comprises multiple trimming units 200. Each trimming unit 200 comprises a knife block 20 as described in the above, as well as an associated drive motor 210. The different drive motors may rotate independently from each other. It is noted that within the context of the present invention is it also possible that the different drive motors are synchronized with each other, or that a single common drive motor is provided, but it is an advantage of the present invention that it is possible to implement the drive without the necessity of synchronization.

The trimming assembly 100 comprises a frame 110 to which the different trimming units 200 are attached, so that the different trimming units 200 with respect to each other are positionally fixed. Alternatively, it would be possible that the trimming units are attached to the housing.

The different trimming units may be mutually identical. In the following, the trimming units in general will be indicated by the reference numeral 200; in case it is desired to distinguish the trimming units with respect to each other, a letter A, B, C et cetera will be added, and this also applies to the constituting components.

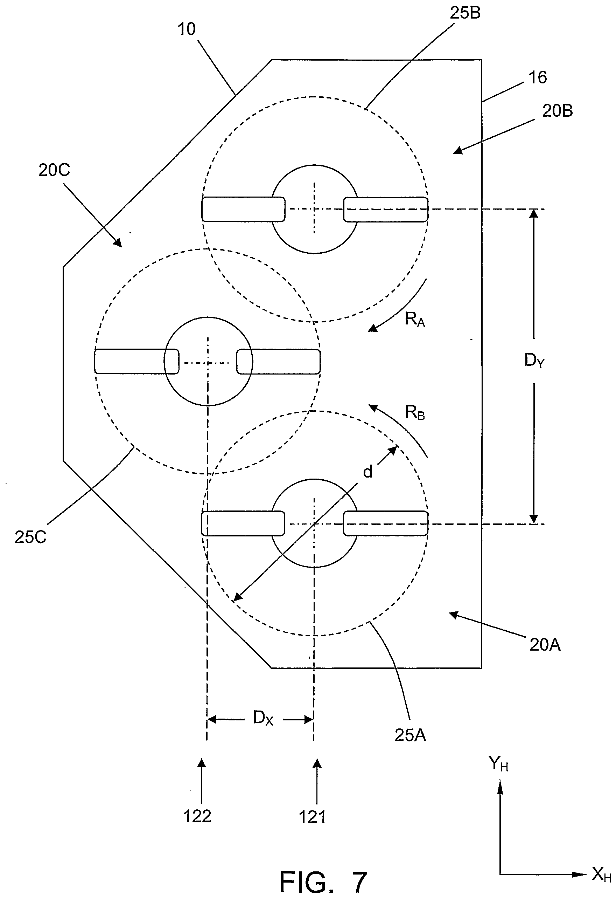

In the example shown, the trimming assembly 100 comprises three knife blocks 20A, 20B, 20C, arranged in a triangular configuration. Figure 7 shows thereof a schematic bottom view, in which the housing 10 is also shown. The entry 16 of the housing 10 is directed to the right in this figure. More generally, the trimming assembly 100 comprises an odd number of knife blocks 20, arranged in two mutually parallel rows in the y_{H}-direction, wherein the rows in the x_{H}-direction have a mutual distance larger than zero. The row closest to the entrance 16 will be indicated as front row 121, and the other row will be indicated as rear row 122. The number of knife blocks in the front row 121 may be equal to the number of knife blocks in the rear row 122 but is preferably one more than the number of knife blocks in the rear row 122. The knife blocks of the rear row 122 are displaced in the y_{H}-direction with respect to the knife blocks of the front row 121, so that, seen according to the x_{H}-direction, each knife block of the rear row 122 is always located between two knife blocks of the front row 121.

Alternatively, it is possible that the front row 121 and the rear row 122 mutually switch places, so that the rear row has more knife blocks than the front row. In the example shown, the front row 121 has two knife blocks 20A, 20B and the rear row 122 has a single knife block 20C.

In figure 7 is shown that the mutual distance Dy between the two knife blocks 20A, 20B of the front row 121 (measured in the y_{H}-direction between the respective rotation axes 24A and 24B) is larger than twice the diameter d of the lower knife discs 25A and 25B, so that their respective knifes will not touch each other, but is smaller than 2d plus the diameter of the lower knife disc 25C of the rear row 122 (in other words: smaller than 3d), so that the problem discussed with reference to figure 4A does not exist any more.

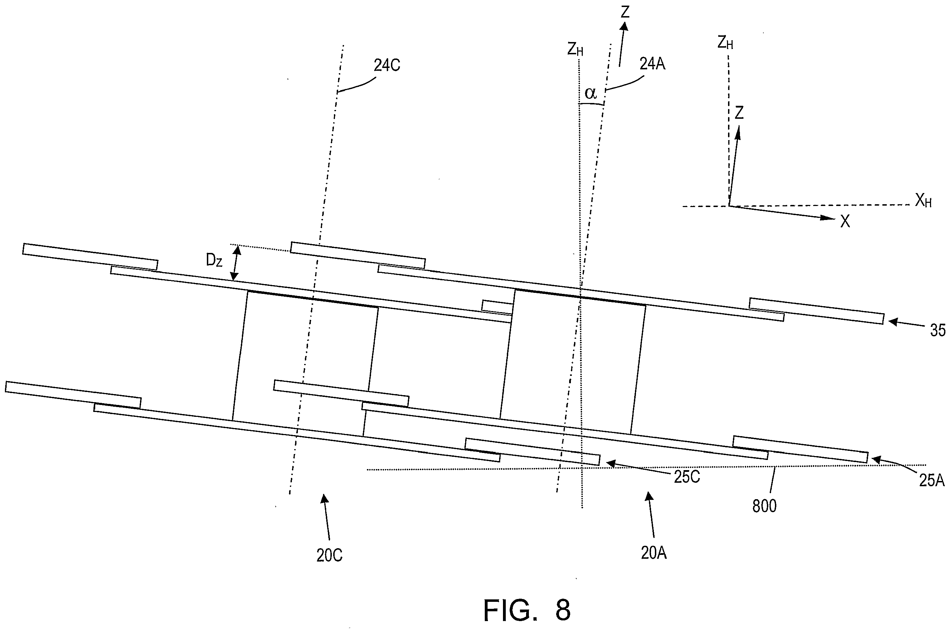

Figure 8 is a schematic side view of the trimming assembly 100, in which only the knife blocks 20A and 20C are shown (knife block 20B is not visible because this is located behind knife block 20A). The plane of drawing is perpendicular to the y_{H}-direction, and thus is an x_{H}z_{H}-plane. The entrance 16 of the housing 10 not shown for sake of simplicity is located at the right hand side in this view. It is shown in this figure that the rotation axes 24 of the knife blocks 20 make a small angle Z_{H}-axes, in such a way that the lower knife disc 25 achieves its lowest point at the front side of this knife disc. Several advantages are achieved by this, as will be explained later in more detail.

In the above, an orthogonal system of axes x_{H}, y_{H}, z_{H} has been defined in relation to the fixed world. The oblique position of the rotation axes 24 can be achieved by pivoting a rotation axes 24 around the y_{H}-direction, starting from an orientation parallel to the height axes z_{H}. In the following an orthogonal system of axes x, y, z will be defined in relation to the trimming assembly 100. The z-axes will be defined parallel to the rotation axes 24. Thus, the z-axes makes an angle α with the direction z_{H}. The z-direction will also be indicated as axial direction. The y-axes will be defined parallel to the y_{H}-direction, and will thus also be indicated as width direction. The x-axes will be defined in the plane of a knife disc, perpendicular to the y- and z-directions. Thus, the x-axes makes an angle α with the direction x_{H}.

Thus, the plane of drawing of figure 8 is an xz-plane, perpendicular to the y-direction.

An advantage of the oblique position of the trimming assembly 100 is that the upper knife disc 35 will arrive at the shoot to be trimmed and will cut this shoot before the lower knife disc 25 does so. This contributes to an improved chopping result.

A further advantage of the oblique position of the trimming assembly 100 is that, after a shoot has been cut by the front edge of the lower knife disc 25, the lower knife disc will not rub over the tops of the remaining branches so that the disadvantages discussed with reference to figure 5 are avoided.

Figure 8 further illustrates that the axial position of the knife block 20C of the rear row 122 is lower than the axial position of the two knife blocks 20A, 20B of the front row 121. Taking into account the pivot angle α and the diameter d of the knife discs 25, the axial displacement dz of the rear row 122 with respect to the front row 121 is such that the lowest point of the lower knife disc 25A, 25B of the front knife blocks 20A, 20B is located at the same height as the lowest point of the lowest knife disc 25C of the rear knife block 20C, so that the disadvantage discussed with reference to figure 4C is avoided.

More generally, there is a two dimensional plane extending in the y-direction touching all lower knife discs 25A, 25B, 25C of all trimming units. This plane is indicated by reference numeral 800 is figure 8. This imaginary plane has a fixed orientation with respect to the trimming unit 100. During use of the trimming machine 1, the trimming unit 100 is held in such a way that this imaginary common tangent plane 800 is held parallel to the surface to be trimmed. If the trimming machine 1, as is preferred, is provided with a house 10 around the trimming unit 100, this house has a lower side parallel to the imaginary common tangent plane 800.

Figure 7 shows that, because of the oblique position of the knife blocks 20A, 20B, 20C, it is possible that the mutual distance dx between the two knife blocks 20A, 20B of the front row 121 on the one hand and the knife block 20C of the rear row 122 on the other hand (measured in the x-direction between the plane in which the respective rotation axes 24A and 24B are located on the one hand and the plane parallel to that and through the rotation axes 24C on the other hand) can be fairly small, smaller than d√2. Because of this, the knife discs can overlap each other in z-projection (compare figure 7) fairly far, which contributes to a good chopping result. In theory, it is sufficient if dz is so small that the knives rotate just free from each other. In practice however it is sensible to set a somewhat larger distance for dz, for instance in the order of 15 mm, in order to be able to accommodate bending of the knives as result of thick branches.

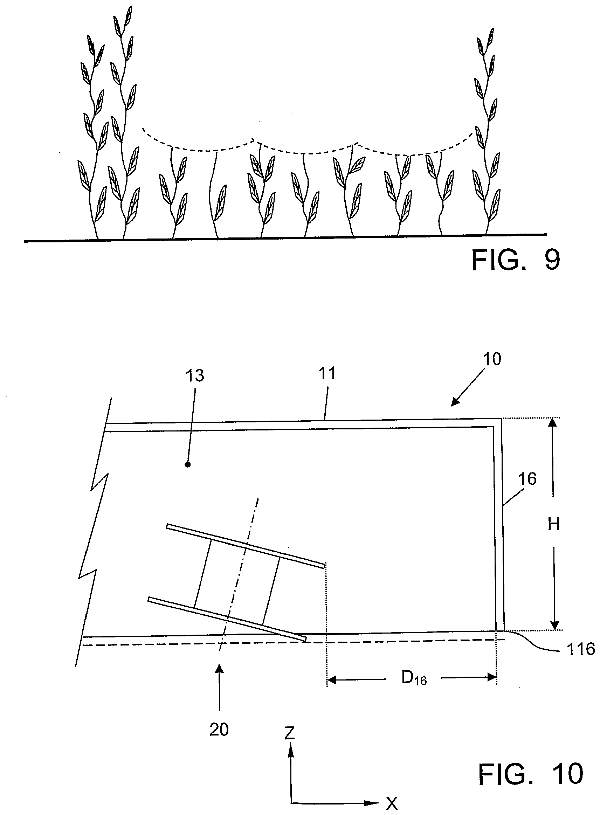

The attentive reader will note that the rotating knives now in principle do not leave behind a planner trimming surface but a surface that is curved concavely, as schematically shown in figure 9. The pivoting angle α of the rotation axes is however so small, for instance about 6°, that this effect is hardly noticeable. Furthermore, the cut shoots have a certain measure of flexibility, and the trimming surface is always somewhat irregular because of the foliage present, causing the curvature, which is very small and hardly noticeable any way, to be completely camouflaged. All in all, the effect mentioned is absolutely acceptable and can not be considered as a disadvantage.

Preferably, the rotation directions of the front knife blocks 20A, 20B are mutually opposite, in such a way that the respective knives at their front edges move towards each other and then backwards in the central part of the housing 10, towards the rear knife block 20C, as illustrated by arrows RA and RB in figure 7. Because of this, the twines cut by the front knives are guided to the rear knife, which contributes to an advantageous chopping result and reduces branch parts spatting outwards.

An important aspect of a cutting machine is safety. The housing 10 already mentioned serves this purpose, on the one hand counteracting that a body part of a person can easily find itself between the rotating knifes, and on the other hand counteracting wood chips to shoot away as projectiles. Therefore, the housing 10 is almost completely closed, obviously having an open bottom face, as mentioned already in the above. On the other hand, it must be possible for the shoots to be cut to enter the housing, for which purpose it is known in practice that the front face of the housing is open, as also already mentioned in the above. However, this open front face intrinsically reduces the safety aspect. The present invention also aims to provide an improvement in this respect.

Figure 10 shows a schematic cross section of a part of the trimming machine 1 in which a front knife block 20 is visible, and in which a part of the housing 10 is visible. The front side of the machine 1 is at the right hand side in the figure. A side wall 13 of the housing 10 is also visible, as well as the upper wall 11. According to an important safety aspect of the present invention, the housing 10 has a closed front wall 16 at a fairly large distance D16 with respect to the front edge of the knives of the front knife block 20. This distance D16 is at least 15 cm, preferably even more than 20 cm, and most preferably in the order of 25 cm. The height dimension of the front wall 16, and thus the height H of the front wall 11, is also at least 15 cm, preferably even more than 20 cm, and most preferably in the order of 25 cm. It is preferred that H is equal to D16.

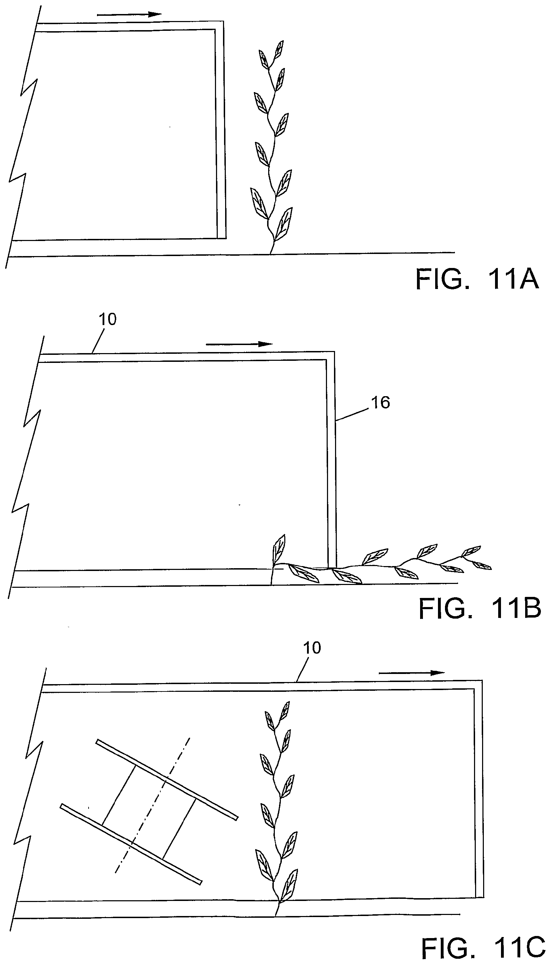

Thanks to the presence of the closed front wall 16, it is almost impossible for a body part to meet the rotating knives. Because of the large distance between the front wall 16 and the knives, it is still possible for a large shoot, after passing the front wall 16, to erect itself again such as to be properly cut, as illustrated in figures 11A-11C.

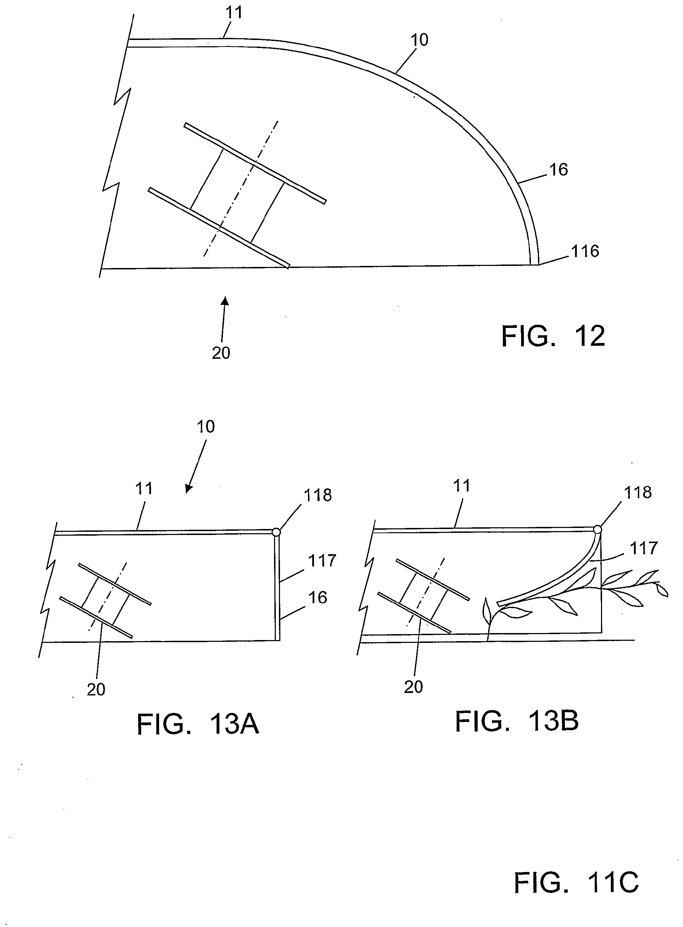

In this respect, particularly the position of the lower edge 116 of the front wall 16 plays a roll. In the example shown, the front wall 16 is vertical, and makes an angle of 90° with the upper wall 11, but it is also possible that the front wall 16 is bend according to a quarter cylindrical contour and thus smoothly changes into the upper wall 11, as schematically shown in figure 12.

The front wall 16 may be a rigid wall. Preferably however the front wall 16 is formed by sturdy but flexible rubber or plastic strips 117, of which the upper end 118 is attached to the front edge 111 of the upper wall 11, as illustrated in figure 13A. The strips may have a width of about 5 to 10 cm, although other sizes are also conceivable. Such strips will bend along inwards to facilitate a shoot to be cut to enter the housing 10 as illustrated in figure 13B, which contributes to a good cutting result.

Thus, a trimming machine 1 comprising a housing 10 and three trimming units 200A, 200B, 200C, arranged in the housing according to a triangular configuration is provided. Each trimming unit comprises a rotatable knife block 20; the different knife blocks have mutually parallel rotation axes 24. The housing has an open bottom face 15 perpendicular to a z_{H}-direction. The housing has a front side. A direction directed toward the front side and parallel to the bottom face defines an x_{H}-direction. A direction directed perpendicular to the x_{H}-direction and parallel to the bottom face defines an y_{H}-direction.

Each rotation axes is located in an x_{H}-z_{H}-plane and makes a small angle α larger than zero with the z-direction.

Two trimming units 200A, 200B are arranged next to each other in the y_{H}-direction. The third trimming unit 200C is displaced in x_{H}-direction and in y_{H}-direction with respect to the two first mentioned trimming units 200A, 200B but is located at the same height in z_{H}-direction as the two first mentioned trimming units 200A, 200B.

It will be clear to a person skilled in the art that the invention is not limited to the exemplary embodiments discussed in the above but that several variations and modifications are possible within the protective scope of the invention as defined in the attached claims. For instance, it is possible that there is a third row of trimming units. Although the illustrated embodiment is preferred, the advantages achieved are already achieved if the front row has only one single trimming unit while also the rear row has a single trimming unit, or two trimming units. More generally, it is conceivable that the number of trimming units of the front row is equal to the number of trimming units of the rear row, or that these numbers mutually have a difference of one.

In the above, the assumption has been that all knives are equally long, more particularly that all knife discs have equally large diameters. However, it is also conceivable that the diameters are mutually different, as long as the arrangement is such that the lower knife discs of all trimming units have a common tangent plane.

Further in the above the bottom face of the housing 10 has been described as being completely open. However, it is conceivable that this bottom face is partly closed with a plate or plate parts, in places where this does not harm the trimming result, and because of the oblique position of the knife discs such plate parts might even be located partly under the knife discs.

Features which have only been described for a certain embodiment can also be applied in other described embodiments. Features of different embodiments may be combined to arrive at another embodiment.

## Claims

1. Trimming machine (1) that is easily capable of trimming large surfaces, such as hedges, the trimming machine comprising a trimming assembly (100) comprising a plurality of trimming units (200), wherein each trimming unit (200) comprises a rotatable knife block (20), wherein the different knife blocks have mutually substantially parallel rotation axes (24), wherein an axial direction parallel to these rotation axes (24) defines a z-direction;
wherein the trimming machine has a first radial direction perpendicular to said axial direction, defining an γ-direction;
wherein the trimming machine has a second radial direction perpendicular to said axial direction and perpendicular to said first radial direction, defining an x-direction;
wherein the trimming assembly (100) comprises a front row (121) of at least two knife blocks (20A, 20B) arranged next to each other in the y-direction with mutually substantially equal axial position;
wherein the trimming assembly (100) comprises a rear row (122) of at least one knife block (20C); **characterized in that** each knife block (20) at its lower side comprises a knife disc (25);
the knife blocks of the rear row (122) are always displaced in x-direction and in y-direction and in z-direction with respect to the knife blocks of the front row (121) in such a way that there is a common tangent plane (800) touching all said knife discs (25); and **in that** neighboring knife discs of the front row (121) on the one hand and of the rear row (122) on the other hand overlap each other in z-projection.

2. Trimming machine according to claim 1, further comprising a housing (10) surrounding the trimming assembly (100) at least at the top and the sides, wherein the housing has a length direction (x_{H}) and a width direction (y_{H}) and a height direction (z_{H}), which three directions are mutually orthogonal, wherein the axial direction (z) of the rotation axes (24) makes an angle (α) larger than zero with the height direction (zH) of the housing.

3. Trimming machine according to claim 1 or 2, wherein the number of knife blocks (20A, 20B) in the front row (121) is one more than the number of knife blocks (20C) in the rear row (122) .

4. Trimming machine according to claim 3, wherein the distance measured in y-direction between two adjacent knife blocks (20A, 20B) in the front row (121) is equal to Dy, and wherein the displacement in y-direction of a knife block (20C) in the rear row (122) with respect to said two adjacent knife blocks (20A, 20B) in the front row (121) is equal to Dy/2.

5. Trimming machine according to claim 3, wherein the number of knife blocks (20A, 20B) in the front row (121) is equal to 2 and the number of knife blocks (20C) in the rear row (122) is equal to 1.

6. Trimming machine according to any of the previous claims, wherein each knife disc (25) has a cutting diameter (d), wherein the distance (Dy) measured in y-direction between two adjacent knife blocks (20A, 20B) of the front row (121) is larger than twice the cutting diameter (d) and smaller than three times the cutting diameter (d) and wherein the distance (Dx) measured in x-direction between the knife blocks (20C) of the rear row (122) and the knife blocks (20A, 20B) of the front row (121) is smaller than √2 times the cutting diameter (d).

7. Trimming machine according to any of the previous claims, wherein, measured in the direction of the rotation axes (24), the mutual distance between a knife disc (25A, 25B) of a knife block (20A, 20B) of the front row (121) and a knife disc (25C) of a knife block (20C) of the rear row (122) is in the order of 15 mm.

8. Trimming machine according to any of the previous claims, wherein the rotation directions of two adjacent knife blocks (20A, 20B) of the front row (121) are mutually opposite.

9. Trimming machine according to any of the previous claims, wherein each knife block (20) comprises a second knife disc (35) mounted at axial distance above the lower knife disc (25), wherein both knife discs (25, 35) have a common rotation axis (24) .

10. Trimming machine according to any of the previous claims, wherein a knife disc (25) comprises N knives (23) extending substantially radially with respect to the rotation axis (24) and in a common plane, wherein always the mutual angular distance between two neighboring knives (23) is about equal to 360°/N;
and wherein preferably N is equal to 2 or 3 or 4, more preferably equal to 2.

11. Trimming machine according to claim 9, wherein the lower knife disc (25) comprises N knives (23) extending substantially radially with respect to the rotation axis (24) and in a common plane, wherein the second knife disc (35) comprises N knives (33) extending substantially radially with respect to the rotation axis (24) and in a common plane, and wherein the knives (23, 33) of the two knife discs (25, 35) with respect to each other are displaced in peripheral direction over a distance of 180°/N;
and wherein preferably N is equal to 2 or 3 or 4, more preferably equal to 2.

12. Trimming machine according to claim 10 or 11, wherein each knife block (20) comprises a knife carrier (21), and wherein each knife (23) with respect to the knife carrier (21) is pivotable about a pivot axis parallel to the rotation axis (24); and wherein preferably N is equal to 2 or 3 or 4, more preferably equal to 2.

13. Trimming machine according to any of the previous claims, wherein each trimming unit (200) comprises an individual drive motor (210).

14. Trimming machine according to any of the previous claims, further comprising a housing (10) enclosing the trimming assembly (100) at least at the top and the sides, wherein the housing (10) at its front side has a closed front wall (16);
and wherein the front wall (16) is preferably formed by sturdy but flexible rubber or plastic strips (117), of which the upper end (118) is attached to the upper wall (11).

15. Trimming machine according to claim 14, wherein the horizontal distance (D16) between the front wall (16) and the knife blocks (20A, 20B) is at least equal to 15 cm, preferably larger than 20 cm, and more preferably approximately equal to 25 cm;
wherein the housing (10) has an upper wall (11) of which the distance (H) to the common tangent plane (800) is at least equal to 15 cm, preferably larger than 20 cm, and more preferably approximately equal to 25 cm;
and wherein most preferably said distance (H) between the upper wall (11) and the common tangent plane (800) is equal to the said horizontal distance (D16) between the front wall (16) and the trimming units (200A, 200B) of the front row (121).

16. Trimming machine according to any of the previous claims, wherein the number of knife blocks in the front row is equal to two,
wherein the number of knife blocks in the rear row is equal to one,
and wherein the rotation directions of the front knife blocks (20A, 20B) are mutually opposite, in such a way that the respective knives at their front edges move towards each other and then backwards towards the rear knife block (20C).

17. Combination of a tractor (3) with a manipulation arm (2) and a trimming machine according to any of the previous claims mounted at the end of the manipulation arm, such that the trimming machine can be lifted and the orientation of the trimming machine can be adapted to the orientation of the large surface to be trimmed, such as a hedge.

18. Method for trimming a hedge (H) or the like, wherein the trimming machine according to any of the previous claims is used, wherein the trimming assembly (100) is held with respect to the hedge in such a way that the common tangent plane (800) is substantially parallel to the hedge surface to be cut, and wherein the trimming assembly (100) is displaced in a direction parallel to the common tangent plane (800).

19. Method according to claim 18, wherein the trimming machine is mounted at the end of a manipulation arm (2) of a tractor (3), and wherein the tractor drives along the hedge (H) or the like to be trimmed, and wherein the hedge face is trimmed while driving.

## Patentansprüche

1. Schneidmaschine (1), die leicht in der Lage ist, große Flächen, wie zum Beispiel Hecken, zu beschneiden, wobei die Schneidmaschine eine Schneidanordnung (100) umfasst, die mehrere Schneideinheiten (200) umfasst, wobei jede Schneideinheit (200) einen drehbaren Messerblock (20) umfasst, wobei die verschiedenen Messerblöcke zueinander im Wesentlichen parallele Drehachsen (24) aufweisen, wobei eine axiale Richtung, die zu diesen Drehachsen (24) parallel ist, eine z-Richtung definiert;
wobei die Schneidmaschine eine erste radiale Richtung aufweist, die zu der axialen Richtung senkrecht ist, und eine γ-Richtung definiert;
wobei die Schneidmaschine eine zweite radiale Richtung aufweist, die zu der axialen Richtung senkrecht ist und zu der ersten radialen Richtung senkrecht ist, und eine x-Richtung definiert;
wobei die Schneidanordnung (100) eine vordere Reihe (121) von mindestens zwei Messerblöcken (20A, 20B) umfasst, die nebeneinander in der γ-Richtung mit einer zueinander im Wesentlichen gleichen axialen Position angeordnet sind;
wobei die Schneidanordnung (100) eine hintere Reihe (122) von mindestens einem Messerblock (20C) umfasst; **dadurch gekennzeichnet, dass** jeder Messerblock (20) an seiner Unterseite eine Messerscheibe (25) umfasst;
die Messerblöcke der hinteren Reihe (122) immer in der x-Richtung und in der γ-Richtung und in der z-Richtung in Bezug auf die Messerblöcke der vorderen Reihe (121) verschoben sind, so dass eine gemeinsame Tangentialebene (800) vorhanden ist, die alle der Messerscheiben (25) berührt; und dadurch, dass benachbarte Messerscheiben einerseits der vorderen Reihe (121) und anderseits der hinteren Reihe (122) sich in Z-Projektion überlappen.

2. Schneidmaschine nach Anspruch 1, ferner umfassend ein Gehäuse (10), das die Schneidanordnung (100) mindestens an der Oberseite und den Seiten umgibt, wobei das Gehäuse eine Längenrichtung (xH) und eine Breitenrichtung (yH) und eine Höhenrichtung (zH) aufweist, wobei die drei Richtungen zueinander orthogonal sind, wobei die axiale Richtung (z) der Drehachsen (24) einen Winkel (α), der größer als null ist, mit der Höhenrichtung (zH) des Gehäuses bildet.

3. Schneidmaschine nach Anspruch 1 oder 2, wobei die Anzahl von Messerblöcken (20A, 20B) in der vorderen Reihe (121) eine mehr als die Anzahl von Messerblöcken (20C) in der hinteren Reihe (122) ist.

4. Schneidmaschine nach Anspruch 3, wobei der Abstand, der in der γ-Richtung zwischen zwei benachbarten Messerblöcken (20A, 20B) in der vorderen Reihe (121) gemessen wird, Dy entspricht und wobei die Verschiebung in der γ-Richtung eines Messerblocks (20C) in der hinteren Reihe (122) in Bezug auf die zwei benachbarten Messerblöcke (20A, 20B) in der vorderen Reihe (121) Dy/2 entspricht.

5. Schneidmaschine nach Anspruch 3, wobei die Anzahl von Messerblöcken (20A, 20B) in der vorderen Reihe (121) 2 entspricht und die Anzahl von Messerblöcken (20C) in der hinteren Reihe (122) 1 entspricht.

6. Schneidmaschine nach einem der vorhergehenden Ansprüche, wobei jede Messerscheibe (25) einen Schneiddurchmesser (d) aufweist, wobei der Abstand (Dy), der in der γ-Richtung zwischen zwei benachbarten Messerblöcken (20A, 20B) der vorderen Reihe (121) gemessen wird, größer als das Zweifache des Schneiddurchmessers (d) und kleiner als das Dreifache des Schneiddurchmessers (d) ist und wobei der Abstand (Dx), der in der x-Richtung zwischen den Messerblöcken (20C) der hinteren Reihe (122) und den Messerblöcken (20A, 20B) der vorderen Reihe (121) gemessen wird, kleiner als das √2-Fache des Schneiddurchmessers (d) ist.

7. Schneidmaschine nach einem der vorhergehenden Ansprüche, wobei, gemessen in der Richtung der Drehachsen (24), der gegenseitige Abstand zwischen einer Messerscheibe (25A, 25B) eines Messerblocks (20A, 20B) der vorderen Reihe (121) und einer Messerscheibe (25C) eines Messerblocks (20C) der hinteren Reihe (122) in der Größenordnung von 15 mm liegt.

8. Schneidmaschine nach einem der vorhergehenden Ansprüche, wobei die Drehrichtungen von zwei benachbarten Messerblöcken (20A, 20B) der vorderen Reihe (121) einander entgegengesetzt sind.

9. Schneidmaschine nach einem der vorhergehenden Ansprüche, wobei jeder Messerblock (20) eine zweite Messerscheibe (35) umfasst, die in einem axialen Abstand über der unteren Messerscheibe (25) befestigt ist, wobei beide Messerscheiben (25, 35) eine gemeinsame Drehachse (24) haben.

10. Schneidmaschine nach einem der vorhergehenden Ansprüche, wobei eine Messerscheibe (25) N Messer (23) umfasst, die sich im Wesentlichen radial in Bezug auf die Drehachse (24) und in einer gemeinsamen Ebene erstrecken, wobei der gegenseitige Winkelabstand zwischen zwei benachbarten Messern (23) immer etwa 360°/N entspricht;
und wobei N vorzugsweise 2 oder 3 oder 4, mehr bevorzugt 2, entspricht.

11. Schneidmaschine nach Anspruch 9, wobei die untere Messerscheibe (25) N Messer (23) umfasst, die sich im Wesentlichen radial in Bezug auf die Drehachse (24) und in einer gemeinsamen Ebene erstrecken, wobei die zweite Messerscheibe (35) N Messer (33) umfasst, die sich im Wesentlichen radial in Bezug auf die Drehachse (24) und in einer gemeinsamen Ebene erstrecken, und wobei die Messer (23, 33) der zwei Messerscheiben (25, 35) zueinander in peripherer Richtung über einen Abstand von 180°/N verschoben sind;
und wobei N vorzugsweise 2 oder 3 oder 4, mehr bevorzugt 2, entspricht.

12. Schneidmaschine nach Anspruch 10 oder 11, wobei jeder Messerblock (20) einen Messerträger (21) umfasst und wobei jedes Messer (23) in Bezug auf den Messerträger (21) um eine Schwenkachse schwenkbar ist, die zu der Drehachse (24) parallel ist;
und wobei N vorzugsweise 2 oder 3 oder 4, mehr bevorzugt 2, entspricht.

13. Schneidmaschine nach einem der vorhergehenden Ansprüche, wobei jede Schneideinheit (200) einen individuellen Antriebsmotor (210) umfasst.

14. Schneidmaschine nach einem der vorhergehenden Ansprüche, ferner umfassend ein Gehäuse (10), das die Schneidanordnung (100) mindestens an der Oberseite und den Seiten einschließt, wobei das Gehäuse (10) an seiner Vorderseite eine geschlossene vordere Wand (16) aufweist; und wobei die vordere Wand (16) vorzugsweise durch robuste, jedoch flexible Kautschuk- oder Kunststoffstreifen (117) gebildet ist, deren oberes Ende (118) an der oberen Wand (11) befestigt ist.

15. Schneidmaschine nach Anspruch 14, wobei der horizontale Abstand (D16) zwischen der vorderen Wand (16) und den Messerblöcken (20A, 20B) mindestens 15 cm entspricht, vorzugsweise größer als 20 cm ist und mehr bevorzugt ungefähr 25 cm entspricht;
wobei das Gehäuse (10) eine obere Wand (11) aufweist, deren Abstand (H) zu der gemeinsamen Tangentialebene (800) mindestens 15 cm entspricht, vorzugsweise größer als 20 cm ist und mehr bevorzugt ungefähr 25 cm entspricht;
und wobei am meisten bevorzugt der Abstand (H) zwischen der oberen Wand (11) und der gemeinsamen Tangentialebene (800) dem horizontalen Abstand (D16) zwischen der vorderen Wand (16) und den Schneideinheiten (200A, 200B) der vorderen Reihe (121) entspricht.

16. Schneidmaschine nach einem der vorhergehenden Ansprüche, wobei die Anzahl der Messerblöcke in der vorderen Reihe gleich zwei ist, wobei die Anzahl der Messerblöcke in der hinteren Reihe gleich eins ist, und wobei die Drehrichtungen der vorderen Messerblöcke (20A, 208) einander entgegengesetzt sind, so dass sich die jeweiligen Messer an ihren Vorderkanten aufeinander zu und dann rückwärts in Richtung des hinteren Messerblocks (20C) bewegen.

17. Kombination aus einem Traktor (3) mit einem Manipulationsarm (2) und eine Schneidmaschine nach einem der vorhergehenden Ansprüche, die an dem Ende des Manipulationsarms so montiert ist, dass die Schneidmaschine angehoben werden kann und die Orientierung der Schneidmaschine angepasst werden kann an die Orientierung der großen Fläche, die zu schneiden ist, wie zum Beispiel eine Hecke.

18. Verfahren zum Schneiden einer Hecke (H) oder dergleichen, wobei die Schneidmaschine nach einem der vorhergehenden Ansprüche verwendet wird, wobei die Schneidanordnung (100) in Bezug auf die Hecke derart gehalten wird, dass die gemeinsame Tangentialebene (800) im Wesentlichen parallel zu der Heckenoberfläche ist, die geschnitten werden soll, und wobei die Schneidanordnung (100) in einer Richtung verschoben wird, die zu der gemeinsamen Tangentialebene (800) parallel ist.

19. Verfahren nach Anspruch 18, wobei die Schneidmaschine an dem Ende eines Manipulationsarms (2) eines Traktors (3) montiert ist, und wobei der Traktor entlang der zu schneidenden Hecke (H) oder dergleichen fährt, und wobei die Heckenfläche während des Fahrens geschnitten wird.

## Revendications

1. Machine de taille (1) qui peut facilement tailler de grandes surfaces, comme des haies, la machine de taille comprenant un ensemble de taille (100) comprenant une pluralité d'unités de taille (200), dans laquelle chaque unité de taille (200) comprend un bloc de lames (20) tournant, dans laquelle les différents blocs de lames ont des axes de rotation (24) mutuellement sensiblement parallèles, dans laquelle une direction axiale parallèle à ces axes de rotation (24) définit une direction z ;
dans laquelle la machine de taille a une première direction radiale perpendiculaire à ladite direction axiale, définissant une direction y ;
dans laquelle la machine de taille a une seconde direction radiale perpendiculaire à ladite direction axiale et perpendiculaire à ladite première direction radiale, définissant une direction x ;
dans laquelle l'ensemble de taille (100) comprend une rangée avant (121) d'au moins deux blocs de lames (20A, 20B) agencés près l'un de l'autre dans la direction y avec une position axiale mutuellement sensiblement égale ;
dans laquelle l'ensemble de taille (100) comprend une rangée arrière (122) d'au moins un bloc de lames (20C) ; **caractérisé en ce que**
chaque bloc de lames (20) en son côté inférieur comprend un disque de lames (25) ;
les blocs de lames de la rangée arrière (122) sont toujours déplacé dans la direction x et dans la direction y et dans la direction z par rapport aux blocs de lames de la rangée avant (121) de telle manière qu'il y a un plan tangent commun (800) touchant tous lesdits disques de lames (25) ;
et **en ce que** des disques de lames voisins de la rangée avant (121) d'une part et de la rangée arrière (122) d'autre part se recouvrent dans la projection selon z.

2. Machine de taille selon la revendication 1, comprenant en outre un carter (10) entourant l'ensemble de taille (100) au moins sur le haut et sur les côtés, dans laquelle le carter a une direction de longueur (x_{H}) et une direction de largeur (y_{H}) et une direction de hauteur (z_{H}), lesquelles trois directions sont mutuellement orthogonales, dans laquelle la direction axiale (z) des axes de rotation (24) forme un angle (a) supérieur à zéro avec la direction de hauteur (z_{H}) du carter.

3. Machine de taille selon la revendication 1 ou 2, dans laquelle le nombre de blocs de lames (20A, 20B) adjacents dans la rangée avant (121) est un de plus que le nombre de bloc de lames (20C) dans la rangée arrière (122).

4. Machine de taille selon la revendication 3, dans laquelle la distance mesurée dans la direction y entre deux blocs de lames (20A, 20B) adjacents dans la rangée avant (121) est égale à Dy, et dans laquelle le déplacement dans la direction y d'un bloc de lames (20C) dans la rangée arrière (122) par rapport auxdits deux blocs de lames (20A, 20B) adjacents dans la rangée avant (121) est égal à Dy/2.

5. Machine de taille selon la revendication 3, dans laquelle le nombre de blocs de lames (20A, 20B) dans la rangée avant (121) est égal à 2 et le nombre de bloc de lames (20C) dans la rangée arrière (122) est égal à 1.

6. Machine de taille selon l'une quelconque des revendications précédentes, dans laquelle chaque disque de lames (25) a un diamètre de coupe (d), dans laquelle la distance (Dy) mesurée dans la direction y entre deux blocs de lames (20A, 20B) adjacents de la rangée avant (121) est supérieure à deux fois le diamètre de coupe (d) et inférieure à trois fois le diamètre de coupe (d) et dans laquelle la distance (Dx) mesurée dans la direction x entre les bloc de lames (20C) de la rangée arrière (122) et les blocs de lames (20A, 20B) de la rangée avant (121) est inférieure à √2 fois le diamètre de coupe (d).

7. Machine de taille selon l'une quelconque des revendications précédentes, dans laquelle, mesurée dans la direction des axes de rotation (24), la distance mutuelle entre un disque de lames (25A, 25B) d'un bloc de lames (20A, 20B) de la rangée avant (121) et un disque de lames (25C) d'un bloc de lames (20C) de la rangée arrière (122) est de l'ordre de 15 mm.

8. Machine de taille selon l'une quelconque des revendications précédentes, dans laquelle les directions de rotation de deux blocs de lames (20A, 20B) adjacents de la rangée avant (121) sont mutuellement opposées.

9. Machine de taille selon l'une quelconque des revendications précédentes, dans laquelle chaque bloc de lames (20) comprend un second disque de lames (35) monté à distance axiale au-dessus du disque de lames (25) inférieur, dans laquelle les deux disques de lames (25, 35) ont un axe de rotation (24) commun.

10. Machine de taille selon l'une quelconque des revendications précédentes, dans laquelle un disque de lames (25) comprend N lames (23) s'étendant sensiblement radialement par rapport à l'axe de rotation (24) et dans un plan commun, dans laquelle la distance angulaire mutuelle entre deux lames (23) voisines est toujours environ égale à 360°/N ;
et dans laquelle de préférence N est égal à 2 ou 3 ou 4, plus préférablement égal à 2.

11. Machine de taille selon la revendication 9, dans laquelle le disque de lames (25) inférieur comprend N lames (23) s'étendant sensiblement radialement par rapport à l'axe de rotation (24) et dans un plan commun, dans laquelle le second disque de lames (35) comprend N lames (33) s'étendant sensiblement radialement par rapport à l'axe de rotation (24) et dans un plan commun, et dans laquelle les lames (23, 33) des deux disques de lames (25, 35) les unes par rapport aux autres sont déplacées dans une direction périphérique sur une distance de 180°/N ;
et dans laquelle de préférence N est égal à 2 ou 3 ou 4, plus préférablement égal à 2.

12. Machine de taille selon la revendication 10 ou 11, dans laquelle dans laquelle chaque bloc de lames (20) comprend un support de lames (21), et dans laquelle chaque lame (23) par rapport au support de lames (21) peut pivoter autour d'un axe de pivot parallèle à l'axe de rotation (24) ;
et dans laquelle de préférence N est égal à 2 ou 3 ou 4, plus préférablement égal à 2.

13. Machine de taille selon l'une quelconque des revendications précédentes, dans laquelle chaque unité de taille (200) comprend un moteur d'entraînement individuel (210).

14. Machine de taille selon l'une quelconque des revendications précédentes, comprenant en outre un carter (10) enclosant l'ensemble de taille (100) au moins sur le haut et sur les côtés, dans laquelle le carter (10) sur son côté avant a une paroi avant (16) fermée ;
et dans laquelle la paroi avant (16) est formée préférablement par des bandes (117) de caoutchouc ou de plastique solides mais flexibles, dont l'extrémité supérieure (118) est fixée sur la paroi supérieure (11).

15. Machine de taille selon la revendication 14, dans laquelle la distance horizontale (D16) entre la paroi avant (16) et les blocs de lames (20A, 20B) est au moins égale à 15 cm, de préférence supérieure à 20 cm, et plus préférablement approximativement égale à 25 cm ;
dans laquelle le carter (10) comporte une paroi supérieure (11) dont la distance (H) au plan tangent commun (800) est au moins égale à 15 cm, de préférence supérieure à 20 cm, et plus préférablement approximativement égale à 25 cm ;
et dans laquelle le plus préférablement ladite distance (H) entre la paroi supérieure (11) et le plan tangent commun (800) est égale à ladite distance horizontale (D16) entre la paroi avant (16) et les unités de taille (200A, 200B) de la rangée avant (121).

16. Machine de taille selon l'une quelconque des revendications précédentes, dans laquelle le nombre de blocs de lames dans la rangée avant est égal à deux, dans laquelle le nombre de blocs de lames dans la rangée arrière est égal à un, et dans laquelle les directions de rotation des blocs de lames (20A, 20B) avant sont mutuellement opposées, de telle manière que les lames respectives au niveau de leurs bords avant se déplacent l'une vers l'autre et ensuite vers l'arrière vers le bloc de lames (20C) arrière.

17. Combinaison d'un tracteur (3) avec un bras de manipulation (2) et une machine de taille selon l'une quelconque des revendications précédentes montée à l'extrémité du bras de manipulation, de telle manière que la machine de taille peut être soulevée et l'orientation de la machine de taille peut être adaptée à l'orientation de la grande surface à tailler, comme une haie.

18. Procédé de taille d'une haie (H) ou autre, dans lequel la machine de taille selon l'une quelconque des revendications précédentes est utilisée, dans laquelle l'ensemble de taille (100) est maintenu par rapport à la haie de telle manière que le plan tangent commun (800) est sensiblement parallèle à la surface de haie à couper, et dans laquelle l'ensemble de taille (100) est déplacé dans une direction parallèle au plan tangent commun (800).

19. Procédé selon la revendication 18, dans lequel la machine de taille est montée à l'extrémité d'un bras de manipulation (2) d'un tracteur (3), et dans lequel le tracteur avance le long de la haie (H) ou autre à tailler, et dans laquelle la face de haie est taillée en avançant.
